# FASCICULE DE BREVET EUROPEEN

(11) **EP 0 836 579 B1**
(45) Date de publication et mention de la délivrance du brevet: **24.02.1999**
(21) Numéro de dépôt: 96924934.1
(22) Date de dépôt: 04.07.1996
(51) Int. Cl.: B65G 69/00

(54) **INSTALLATION DE CONTROLE DE L'IMMOBILISATION D'UN VEHICULE UTILITAIRE PAR RAPPORT A UN EMPLACEMENT DE TRANSBORDEMENT**
BLOCKIERUNGSKONTROLLVORRICHTUNG FÜR EIN ANDOCKENDES LASTFAHRZEUG
APPARATUS FOR IMMOBILISING A UTILITY VEHICLE RELATIVE TO A TRANSSHIPMENT FACILITY

(30) Priorité: 04.07.1995 FR 9508054
(43) Date de publication de la demande: 22.04.1998
(73) Titulaire: Roux, Michel, F-26270 Loriol-sur-Drome (FR)
(72) Inventeur: Roux, Michel, F-26270 Loriol-sur-Drome (FR)
(74) Mandataire: Bruder, Michel
(86) Numéro de dépôt international: FR9601043
(87) Numéro de publication internationale: WO9702201

(56) Documents cités:
- EP-A- 0 366 571
- FR-A- 2 689 845
- US-A- 4 207 019

## Description

La présente invention concerne une installation destinée à contrôler l'immobilisation d'un véhicule utilitaire dans une position déterminée par rapport à un emplacement de transbordement, notamment un quai, ainsi que la communication entre celui-ci et le véhicule.

On sait que, pour assurer la sécurité du personnel manutentionnaire assurant le transbordement de marchandises entre un véhicule et un emplacement de transbordement, il est important de respecter certains impératifs de sécurité. Parmi les plus importants on retiendra particulièrement: le positionnement correct du véhicule par rapport à l'emplacement de transbordement, l'ouverture de la communication entre celui-ci et le véhicule uniquement lorsque ce dernier est en position correcte par rapport à l'emplacement de transbordement, le maintien en position du véhicule tout au long de l'opération de transbordement, et la condamnation de la communication entre l'emplacement de transbordement et le véhicule une fois que les opérations de transbordement sont achevées.

En ce qui concerne le maintien en position du véhicule, on a proposé dans la technique antérieure divers dispositifs qui assurent le calage des roues de celui-ci. Un dispositif de ce type est ainsi constitué d'une cale manuelle mobile qui est disposée sur la surface du sol et qui est pourvue d'un capteur apte à détecter la présence d'une roue du véhicule, ce capteur assurant la commande d'une barrière de sécurité pour permettre son ouverture, lorsque le camion se trouve placé dans la position correcte. Un tel dispositif présente l'inconvénient d'être peu efficace dans la mesure où il peut facilement être "abusé" si un utilisateur bloque, par un moyen quelconque, le capteur, de façon à autoriser l'accès au quai sans que la roue du véhicule soit bloquée. D'autres dispositifs connus utilisent des cales mobiles verticalement, qui sont escamotables dans le sol, mais dont la position fixe dans celui-ci ne correspond pas toujours à la position des roues du véhicule.

On connaît également, par le brevet FR-A-2.652.340, un dispositif destiné à assurer le positionnement d'une cale pliante devant une roue d'un véhicule positionné devant un quai de chargement. Ce dispositif est constitué d'un lien flexible, formant une boucle fermée, qui s'étend entre une poulie de renvoi et des moyens d'entraînement, et une cale pliante fixée au lien, que l'on déplace à l'aide des moyens d'entraînement, de façon à l'amener en butée contre une roue du véhicule, le dépliement de la cale étant provoqué par l'application de celle-ci contre ladite roue. Un tel dispositif présente un premier inconvénient provenant de ce que, la cale se déplaçant en contact direct avec le sol, il est nécessaire que ce dernier soit exempt de déformations importantes, sous peine de perturber gravement le fonctionnement du système. Un second inconvénient provient de ce que le déplacement répété de la cale sur le sol, toujours au même endroit de celui-ci, crée une zone d'usure qui, à la longue, perturbe son fonctionnement correct.

On connaît enfin des moyens destinés à assurer l'immobilisation d'un véhicule, dans une position de transbordement déterminée, notamment par rapport à un quai industriel, comportant au moins un élément de calage mobile pour immobiliser au moins une roue du véhicule, comprenant un support en appui sur le sol et ancré dans celui-ci, un élément de calage, mobile par rapport au support, entre deux positions, à savoir une première position, ou position de repos, et une seconde position, ou position active, dans laquelle l'élément de calage assure le blocage de ladite roue, des moyens d'entraînement pour assurer le déplacement dudit élément de calage par rapport au support, entre sa position de repos et sa position active et vice versa et, des moyens de liaison, aptes à rendre ledit élément de calage solidaire du support lorsqu'il se trouve en position active.

Tous les dispositifs de ce type, s'ils assurent un blocage plus ou moins efficace du véhicule, n'assurent pas un contrôle simple de la communication entre l'emplacement de transbordement et le véhicule et notamment des moyens d'accès à l'emplacement de transbordement, qui soit en liaison avec l'immobilisation du véhicule.

La présente invention a pour but de proposer une installation simple qui permette d'améliorer la sécurité des opérations de transbordement entre notamment un quai et un véhicule utilitaire, dans lequel l'accès au plateau du véhicule par le quai n'est pas possible tant que le véhicule n'est pas correctement immobilisé, dans lequel il n'est pas possible de déplacer le véhicule tant que ledit quai est accessible, et dans lequel le véhicule ne peut être libéré que lorsque les moyens de communication entre l'emplacement de transbordement et le véhicule sont condamnés.

La présente invention a ainsi pour objet une installation destinée à contrôler d'une part l'immobilisation d'un véhicule utilitaire par rapport à un emplacement de transbordement et d'autre part la communication entre cet emplacement de transbordement et le véhicule, comportant des moyens d'immobilisation d'au moins une roue de celui-ci, caractérisée en ce que lesdits moyens d'immobilisation comportent au moins une glissière longitudinale perpendiculaire à l'emplacement de transbordement qui est solidaire du sol, un élément mobile monté à coulissement dans la glissière, qui supporte au moins un verrou, apte à occuper deux positions, à savoir une position de verrouillage dans laquelle il est disposé devant au moins une roue du véhicule, et une position de repos dans laquelle il est rétracté, le verrou étant apte, en position de verrouillage, à subir de la part de ladite roue une sollicitation comportant une composante verticale et/ou horizontale, des moyens solidaires de l'élément mobile aptes à transformer la composante horizontale et/ou la composante verticale de ladite sollicitation en effort de coincement dudit élément mobile dans la glissière.

Dans un mode de mise en oeuvre de l'invention les moyens aptes à transformer la composante horizontale de ladite sollicitation en effort de coincement comprennent deux surfaces de butées, à savoir une surface de butée antérieure disposée du côté opposé à ladite roue et une surface de butée postérieure disposée du côté de ladite roue, qui sont voisines de parois internes latérales de la glissière et qui, lorsque ladite roue vient en appui sur le verrou, sont appliquées sur lesdites parois internes de façon à provoquer le coincement de l'élément mobile dans la glissière.

Dans un autre mode de mise en oeuvre de l'invention, les moyens aptes à transformer la composante horizontale de ladite sollicitation en effort de coincement comprennent deux surfaces de butées de l'élément mobile, à savoir une surface de butée antérieure disposée du côté opposé à ladite roue et une surface de butée postérieure disposée du côté de ladite roue, qui sont voisines de parois internes latérales de la glissière et qui, lorsque la roue vient en appui sur le verrou, sont appliquées sur lesdites parois internes de façon à provoquer le coincement de l'élément mobile dans la glissière.

Dans un autre mode de mise en oeuvre de l'invention, l'élément mobile comporte des moyens d'immobilisation, ou de "précoincement" par rapport à la glissière qui sont actionnés par un organe de commande.

On décrira ci-après, à titre d'exemple non limitatif, une forme d'exécution de la présente invention, en référence au dessin annexé sur lequel :
La figure 1 est une vue en perspective d'une installation suivant l'invention.
La figure 2 est une vue en perspective d'un dispositif d'immobilisation suivant l'invention qui est destiné à assurer le blocage d'une roue d'un véhicule.
La figure 3 est une vue en coupe verticale et longitudinale du dispositif représenté sur la figure 2.
La figure 4 est une vue de dessus du dispositif d'immobilisation représenté sur les figures 2 et 3.
La figure 5 est une vue de dessus partielle schématique avec coupe partielle suivant la ligne V-V, du dispositif d'immobilisation représenté sur les figures 2 à 4.
La figure 6 est une vue partielle en perspective de la partie postérieure du dispositif d'immobilisation représenté sur les figures 2 à 5.
La figure 7 est une vue partielle en coupe du dispositif de la figure 3 suivant la ligne VII-VII de celle-ci.

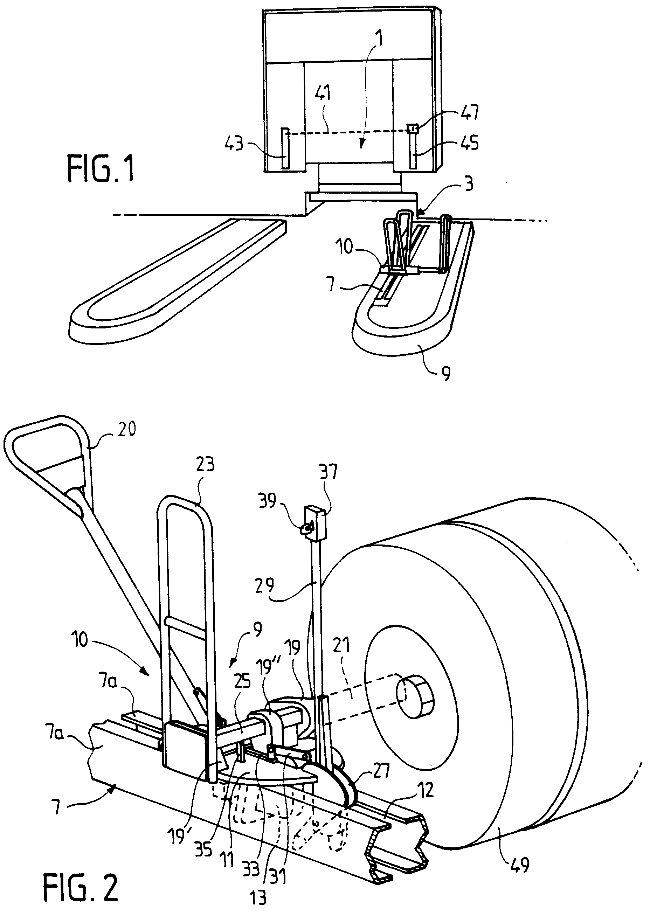

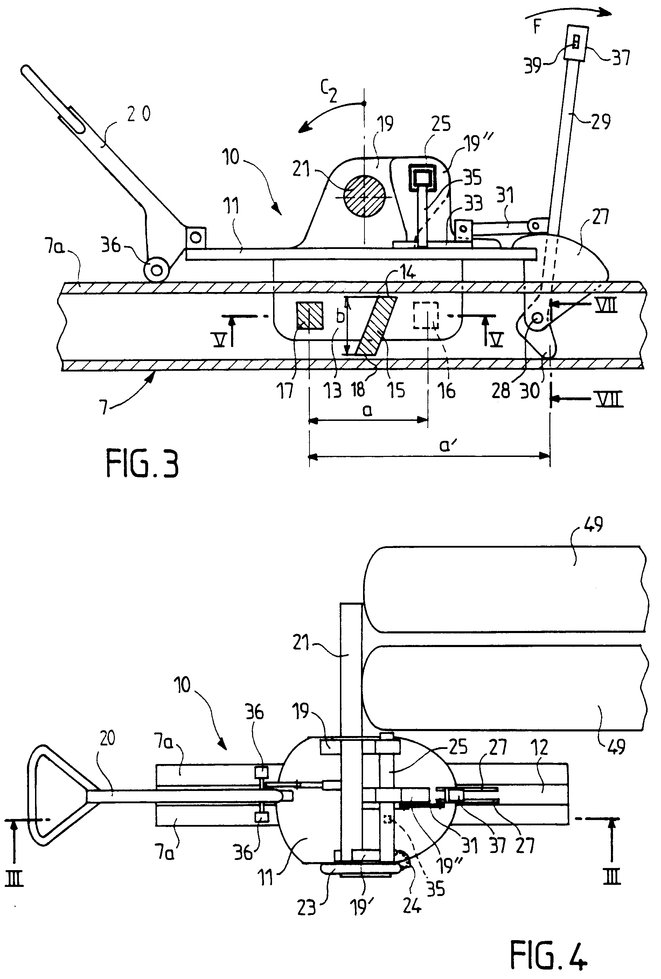

L'installation représentée sur les figures 1 à 7 comprend essentiellement un quai de transbordement 1 et des moyens 3 aptes à assurer l'immobilisation de véhicules.

Les moyens d'immobilisation 3 sont constitués d'une glissière 7 encastrée dans un trottoir 9 qui s'étend longitudinalement et perpendiculairement au quai 1, et qui reçoit, à coulissement, un élément mobile 10. La glissière 7 est formée de deux profilés métalliques 7a, dont la section droite est en forme de U, qui sont écartés l'un de l'autre latéralement et dont les ouvertures se font face pour constituer entre eux au moins une rainure longitudinale supérieure 12. L'élément mobile 10 est constitué d'une platine horizontale 11 dont la face inférieure est pourvue d'une aile verticale 13 qui prend place dans la rainure supérieure 12 existant entre les deux profilés 7a et qui comporte un élément transversal 15, qui est incliné de bas en haut et de l'avant vers l'arrière et dont les faces supérieure 14 et inférieure 18 se situent à faible distance des ailes supérieure et inférieure des profilés 7a, lorsque l'élément mobile 10 est en place sur la glissière 7.

L'aile 13 comporte également deux butées transversales, à savoir une butée postérieure 16 située du côté où prennent place les roues à bloquer 49 du véhicule et une butée antérieure 17, située du côté opposé à celles-ci, et dont les surfaces latérales viennent à faible distance des parois internes latérales de la glissière 7.

La face supérieure de la platine 11 comporte deux supports latéralement opposés 19 et 19' dans lesquels un verrou transversal cylindrique 21 est monté à coulissement, de façon à occuper deux positions caractéristiques, à savoir une position de repos dans laquelle il est rétracté, et une position de blocage dans laquelle il s'étend transversalement en travers du chemin parcouru par les roues 49 du véhicule que l'on souhaite immobiliser. Le verrou 21 comporte, à l'une de ses extrémités, une poignée de commande 23 dont la hauteur est suffisante pour que son actionnement soit possible sans que l'utilisateur ait pour cela besoin de se baisser.

La platine 11 comporte, en arrière du verrou 21, c'est-à-dire du côté de celui-ci disposé vers le quai 1, un palpeur transversal 25 qui est monté à coulissement dans deux supports, à savoir le support 19 et un support 19'', de façon qu'il puisse se déplacer parallèlement au verrou 21. Le palpeur transversal 25 est sollicité vers une position de sortie par des moyens élastiques, non représentés sur le dessin, et une extrémité de celui-ci est liée à la poignée de commande 23 par une chaînette 24 de façon que, lorsque le verrou 21 est en position rétractée, le palpeur transversal 25 le soit également.

La partie postérieure de la platine 11 comporte deux plaquettes axiales 27 qui prennent place dans la rainure 12 et qui s'étendent vers le bas de la glissière 7 et entre lesquelles un levier 29 est monté articulé sur un axe 28 disposé à la base des plaquettes 27. Une biellette 31 est articulée par l'une des ses extrémités à la base du levier 29 et par son autre extrémité sur un palpeur secondaire 33, si bien qu'au cours du mouvement de pivotement du levier 29 le palpeur secondaire 33 effectue un mouvement de translation sous le palpeur transversal 25. Ce dernier comporte un doigt vertical 35 qui s'étend en direction de la platine 11 et qui, lorsque le palpeur transversal 25 est en position sortie, bloque le déplacement vers l'avant du palpeur 33 et donc le mouvement de pivotement vers l'avant du levier 29, et qui, lorsque le palpeur transversal 25 est en position rétractée, laisse le passage au palpeur secondaire 33, ce qui permet alors le pivotement vers l'avant du levier 29.

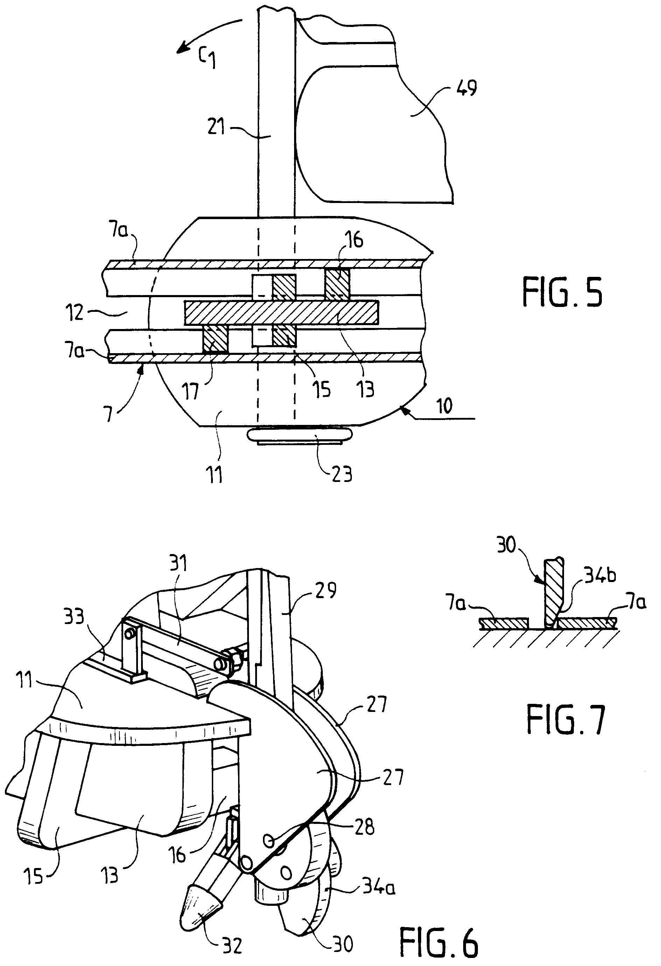

Le levier 29 se prolonge vers le bas, au-delà de son axe de rotation 28, par une came double 30 qui possède un premier profil déterminé 34a dans un plan longitudinal (figure 6) et un second profil déterminé 34b dans un plan transversal (figure 7). Les profils 34a et 34b de la came 30 sont tels que lorsque l'on bascule le levier 29 de l'avant vers l'arrière la came 30 assure une double action. Dans une première action la base du profil 34a vient en contact avec le sol et, dans une seconde action, son profil 34b prend appui contre le chant vertical de l'une des ailes latérales de l'un des profilés 7a formant la glissière 7 (figures 6 et 7). On exposera plus loin l'utilité de ladite came 30.

Le levier 29 est formé d'un tube creux qui renferme des moyens de tringlerie, non représentés sur le dessin, et se termine, à son extrémité supérieure, par une serrure 37 susceptible de recevoir une clé 39. Les moyens de tringlerie sont tels qu'ils agissent sur la serrure 37 de façon qu'il ne soit possible de sortir, ou d'introduire, la clé 39 de la serrure 37 que lorsque le levier 29 est en position avant (figure 2). Par ailleurs, pour pouvoir basculer le levier 29 vers l'arrière il est nécessaire que la clé 39 soit introduite dans la serrure 37.

L'élément mobile 10 comporte des galets 36 et une poignée antérieure 20 permettant de le déplacer le long de la glissière 7.

Le quai de transbordement 1 comporte des moyens permettant d'en contrôler l'accès et qui peuvent être constitués notamment, ainsi que représenté sur la figure 1, par une chaîne 41 qui est fixée par ses extrémités à des poteaux 43 et 45 disposés de part et d'autre de la surface d'accès au quai 1. Le poteau 45 est pourvu d'une serrure 47 apte à admettre la clé 39 et qui permet de libérer ou de maintenir la chaîne 41. La serrure 47 est conçue de telle façon que la clé 39 ne puisse être libérée que lorsque l'extrémité libre de la chaîne 41 est engagée dans la serrure 47.

On pourrait bien entendu utiliser, au lieu de moyens contrôlant l'accès à l'emplacement de transbordement, mettre en oeuvre des moyens empêchant la communication entre la plate-forme du véhicule et l'emplacement de transbordement.

Dans ces conditions le fonctionnement de l'installation suivant l'invention s'établit comme exposé ci-après.

Lorsqu'un véhicule utilitaire se présente devant l'installation suivant l'invention la chaîne 41 obture l'accès au quai 1, le levier 29 de l'élément mobile 10 est en position arrière, la clé 39 est dans la serrure 37, et le verrou 21 est en position rétractée ainsi donc que le palpeur transversal 25. Une fois que le véhicule est positionné correctement par rapport au quai 1, l'utilisateur positionne l'élément mobile 10 par rapport à l'une de ses roues 49 (ou plusieurs roues d'un même essieu) en le déplaçant le long de la glissière 7 en s'aidant de la poignée antérieure 20, de façon que le verrou 21 soit positionné légèrement en avant de la roue 49. L'utilisateur, dans cette position, ne peut pas basculer en avant le levier 29 pour récupérer la clé 39 car, dans cette position, le palpeur secondaire 33 solidaire de la biellette 31 est bloqué par le doigt 35.

L'utilisateur déplace ensuite le verrou 21 transversalement devant la roue 49 du véhicule, ce qui a pour effet de libérer le palpeur transversal 25 qui se déplace alors latéralement sous l'effet des moyens élastiques dont il est pourvu.

Si le verrou 21 est positionné correctement par rapport à la roue 49 du véhicule, c'est-à-dire s'il se trouve juste en avant de celle-ci, le palpeur latéral 25 vient alors en contact avec la roue 49, si bien que le doigt 35 laisse le passage au palpeur secondaire 33, de sorte qu'il est possible dès lors de basculer vers l'avant le levier 29 et de récupérer la clé 39 dans la serrure 37. L'utilisateur peut alors utiliser la clé 39 pour actionner la serrure 47 afin de libérer la chaîne 41 et donner ainsi le libre accès au quai 1. Le basculement en position avant du levier 29 a également pour effet de mettre en contact un patin de caoutchouc 32, dont est pourvue la base du levier 29, avec le fond de la glissière 7 ce qui assure un "précoincement" de l'élément mobile 10 dans ladite glissière 7 (figure 6).

Si l'élément mobile 10 est disposé à une trop grande distance en avant de la roue 49, le palpeur transversal 25 ne vient pas alors en contact avec celle-ci, si bien que, dans ces conditions, le doigt 35 barre le passage au palpeur secondaire 33 et l'utilisateur ne peut alors basculer le levier 29 vers l'avant pour récupérer la clé 39.

Si, au cours de l'opération de transbordement, le véhicule tente d'avancer, la roue 49 de celui-ci entre alors en contact avec le verrou 21 et exerce sur ce dernier deux couples de rotation, à savoir un premier couple C1 résultant d'un effort exercé de l'arrière vers l'avant et un second couple C2 résultant d'un effort exercé du haut vers le bas.

Le premier couple C1 a pour effet d'appliquer les butées latérales 16 et 17 contre les flans internes latéraux de la glissière 7, créant ainsi un coincement s'opposant à toute avance de l'élément mobile 10. On sait qu'un coincement du type de celui obtenu dans les serre-joints se produit lorsque les butées sont suffisamment rapprochées. On sait également qu'un écartement important empêchera le coincement et favorisera le glissement.

L'homme du métier saura déterminer l'écartement a qu'il convient de donner aux deux butées 16 et 17 pour obtenir un coincement de celles-ci dans la glissière 7 sous l'effet de la composante horizontale de l'effort exercé par la roue 49 sur le verrou 21. Le second couple C2 a pour effet quant à lui d'appliquer les faces supérieure et inférieure de l'élément transversal 15 contre les parois internes supérieure et inférieure de la glissière 7, créant ainsi un second coincement s'opposant également à toute avance de l'élément mobile 10 et s'ajoutant au premier. L'homme du métier saura également déterminer l'écartement b qu'il conviendra de donner aux surfaces supérieure et inférieure de l'élément transversal 15 pour obtenir un coincement.

Lorsque l'opération de transbordement est terminée l'utilisateur condamne l'accès au quai 1 en introduisant l'extrémité libre de la chaîne 41 dans la serrure 47, ce qui lui permet alors après verrouillage de la chaîne de récupérer la clé 39. Il peut alors introduire celle-ci dans la serrure 37 du levier 29, ce qui lui permet de débloquer celui-ci et de le faire basculer en arrière (flèche F). Le mouvement de basculement du levier 29 supprime le contact du patin de caoutchouc 32 avec la base de la glissière 7, ce qui supprime ainsi le précoincement de l'élément mobile 10 avec celle-ci. Par ailleurs, comme représenté sur la figure 7, au cours de ce basculement le profil 34b de la came 30 vient en contact avec l'aile latérale 7a de la glissière 7 ce qui a pour effet de créer un nouveau point d'appui constituant une nouvelle butée latérale, si bien que la distance a' séparant désormais les butées latérales devient bien supérieure à la distance a séparant les butées 17 et 16. Dans ces conditions la distance a' étant trop importante pour qu'il y ait coincement, les butées se trouvent libérées. Il en est de même pour les butées verticales de l'élément 15, si bien que l'élément mobile 10 se trouve totalement libéré.

L'utilisateur peut alors faire glisser l'élément mobile 10 sur la glissière 7 puis, en agissant sur la poignée de commande 23 positionner le verrou 21 ainsi que le palpeur transversal 25 en position rétractée de façon à libérer le véhicule.

## Revendications

1. Installation destinée à contrôler d'une part l'immobilisation d'un véhicule utilitaire par rapport à un emplacement de transbordement (1) et d'autre part la communication entre cet emplacement de transbordement (1) et le véhicule, comportant des moyens d'immobilisation (3) d'au moins une roue (49) de celui-ci, caractérisée en ce que lesdits moyens d'immobilisation (3) comportent :
- au moins une glissière longitudinale (7) perpendiculaire à l'emplacement de transbordement (1) qui est solidaire du sol,
- un élément mobile (10) monté à coulissement dans la glissière (7), qui supporte au moins un verrou (21), apte à occuper deux positions, à savoir une position de verrouillage dans laquelle il est disposé devant au moins une roue (49) du véhicule, et une position de repos dans laquelle il est rétracté, le verrou (21) étant apte, en position de verrouillage, à subir de la part de ladite roue (49) une sollicitation comportant une composante verticale et/ou horizontale,
- des moyens (15,16,17) solidaires de l'élément mobile (10) aptes à transformer la composante horizontale et/ou la composante verticale de ladite sollicitation en effort de coincement dudit élément mobile (10) dans la glissière (7).

2. Installation suivant la revendication 1 caractérisée en ce que les moyens aptes à transformer la composante horizontale de ladite sollicitation en effort de coincement comprennent deux surfaces de butées (16,17) de l'élément mobile (10), à savoir une surface de butée antérieure (16) disposée du côté opposé à ladite roue (49) et une surface de butée postérieure (17) disposée du côté de ladite roue (49), qui sont voisines de parois internes latérales de la glissière (7) et qui, lorsque la roue (49) vient en appui sur le verrou (21), sont appliquées sur lesdites parois internes de façon à provoquer le coincement de l'élément mobile (10) dans la glissière (7).

3. Installation suivant la revendication 1 caractérisée en ce que les moyens aptes à transformer la composante verticale de la sollicitation en effort de coincement comprennent deux surfaces de butées (14,18) de l'élément mobile (10), à savoir une surface de butée supérieure et postérieure (14) et une surface de butée inférieure et antérieure (18) qui sont voisines de parois internes respectivement supérieure et inférieure de la glissière (7) et qui, lorsque ladite roue (49) vient en appui sur le verrou (21), sont appliquées sur lesdites parois internes de façon à provoquer le coincement de l'élément mobile (10) dans la glissière (7).

4. Installation suivant l'une quelconque des revendications précédentes caractérisée en ce que la glissière (7) est constituée de deux éléments profilés (7a) métalliques à section droite en forme de U dont les ouvertures se font face et qui sont écartés latéralement pour constituer entre eux au moins une rainure longitudinale supérieure (12).

5. Installation suivant l'une quelconque des revendications 2 à 4 caractérisée en ce que ledit verrou (21) est disposé sur une platine (11) solidaire de l'élément mobile (10), dont la base comporte une aile verticale (13) destinée à prendre place dans une rainure de la glissière (7), lesdites surfaces de butées (16,17-14,18) étant disposées sur ladite aile verticale (13).

6. Installation suivant la revendication 5 caractérisée en ce que les surfaces de butées supérieure (14) et inférieure (18) appartiennent à une même pièce (15).

7. Installation suivant l'une quelconque des revendications précédentes caractérisée en ce que l'élément mobile (10) comprend des moyens de détection (25) du bon positionnement du verrou (21) devant la roue (49) du véhicule, ces moyens de détection étant aptes à interdire la communication entre l'emplacement de transbordement (1) et le véhicule lorsque le verrou (21) est mal positionné par rapport à la roue (49).

8. Installation suivant la revendication 7 caractérisée en ce que les moyens de détection du bon positionnement du verrou (21) comprennent un palpeur transversal (25) disposé en arrière du verrou (21) et qui est appliqué contre la roue à immobiliser (49) du véhicule par des moyens élastiques, lorsque le verrou (21) est positionné correctement par rapport à celle-ci.

9. Installation suivant l'une des revendications 7 ou 8 caractérisée en ce qu'elle comporte des moyens propres à libérer un élément de commande (39) lorsque les moyens de détection (25) du bon positionnement du verrou (21) sont activés, ledit élément de commande (39) assurant l'ouverture et la fermeture des moyens de communication entre l'emplacement de transbordement (1) et le véhicule.

10. Installation suivant l'une quelconque des revendications précédentes caractérisée en ce que l'élément mobile (10) comporte des moyens d'immobilisation, ou de "précoincement" par rapport à la glissière (7) qui sont actionnés par un organe de commande (29).

11. Installation suivant la revendication 10 caractérisée en ce que l'organe de commande est constitué d'un levier (29) monté pivotant autour d'un axe (28) de l'élément mobile (10), l'extrémité inférieure du levier (29) comportant une butée (32) venant, dans une position du levier (29), en contact avec la glissière (7).

12. Installation suivant l'une des revendications précédentes caractérisée en ce que l'élément mobile (10) comporte des moyens (30) propres à assurer son décoincement.

13. Installation suivant l'une des revendications 2 à 12 caractérisée en ce que les moyens de décoincement sont constitués d'une came (30), solidarisée de la partie inférieure d'un levier (29), qui vient en appui sur des faces internes de la glissière (7), de façon à créer de nouvelles surfaces de butée, transversale et/ou verticale, telle que les distances des surfaces de butées extrêmes transversale et/ou verticale soient suffisantes pour provoquer le décoincement de l'élément mobile (10).

14. Installation suivant l'une des revendications 10 ou 11 caractérisée en ce que l'élément de commande (39) libéré lorsque les moyens de détection du bon fonctionnement du verrou (21) sont activés, est disposé sur l'organe de commande (29).

## Claims

1. Installation for, on the one hand, immobilizing a utility vehicle with respect to a transshipment facility (1) and, on the other hand, for controlling communication between this transshipment facility (1) and the vehicle, comprising means (3) for immobilizing at least one wheel (49) thereof, characterized in that said immobilization means (3) comprise:
- at least one longitudinal slideway (7) perpendicular to the transshipment facility (1) which is fast with the ground,
- a mobile element (10) mounted to slide in the slideway (7), which supports at least one lock (21) adapted to occupy two positions, namely a position of locking in which it is disposed in front of at least one wheel (49) of the vehicle, and a rest position in which it is retracted, the lock (21) being adapted, in locking positon, to undergo, from said wheel (49), a stress comprising a vertical and/or horizontal component,
- means (15, 16, 17) fast with the mobile element (10) adapted to transform the horizontal component and/or the vertical component of said stress into an effort of wedging said mobile element (10) in the slideway (7).

2. Installation according to Claim 1, characterized in that the means adapted to transform the horizontal component of said stress into wedging effort comprise two stop surfaces (16, 17) of the mobile element (10), namely a front stop surface (16) disposed on the side opposite said wheel (49) and a rear stop surface (17) disposed towards said wheel (49), which are adjacent lateral inner walls of the slideway (7) and which, when the wheel (49) comes into abutment on the lock (21), are applied on said inner walls so as to provoke wedging of the mobile element (10) in the slideway (7).

3. Installation according to Claim 1, characterized in that the means for transforming the vertical component of the stress into effort of wedging comprise two stop surfaces (14, 18) of the mobile element (10), namely an upper, rear stop two stop surfaces (14, 18) of the mobile element (10), namely an upper, rear stop surface (14) and a lower, front stop surface (18) which are adjacent respectively upper and lower inner walls of the slideway (7) and which, when said wheel (49) comes into abutment on the lock (21), are applied on said inner walls so as to provoke wedging of the mobile element (10) in the slideway (7).

4. Installation according to any one of the preceding Claims, characterized in that the slideway (7) is constituted by two metallic profiled elements (7a) of U-shaped cross-section, of which the openings face one another and which are laterally spaced apart to constitute therebetween at least one upper longitudinal groove (12).

5. Installation according to any one of Claims 2 to 4, characterized in that said lock (21) is disposed on a plate (11) fast with the mobile element (10), of which the base comprises a vertical flange (13) intended to be positioned in a groove in the slideway (7), said stop surfaces (16, 17-14, 18) being disposed on said vertical flange (13).

6. Installation according to Claim 5, characterized in that the upper (14) and lower (18) stop surfaces belong to the same part (15).

7. Installation according to any one of the preceding Claims, characterized in that the mobile element (10) comprises means (25) for detecting the correct positioning of the lock (21) in front of the wheel (49) of the vehicle, these detection means being adapted to prevent communication between the transshipment facility (1) and the vehicle when the lock (21) is badly positioned with respect to the wheel (49).

8. Installation according to Claim 7, characterized in that the means for detecting the correct positioning of the lock (21) comprise a transverse feeler (25) disposed to the rear of the lock (21) and which is applied, by elastic means, against the wheel (49) of the vehicle to be immobilized, when the lock (21) is positioned correctly with respect thereto.

9. Installation according to one of Claims 7 or 8, characterized in that it comprises means for releasing a control element (39) when the means (25) for detecting the correct positioning of the lock (21) are activated, said control element (39) ensuring the opening and closure of the means for communication between the transshipment facility (1) and the vehicle.

10. Installation according to any one of the preceding Claims, characterized in that the mobile element (10) comprises immobilization, or "pre-wedging" means with respect to the slideway (7) which are actuated by a control member (29).

11. Installation according to Claim 10, characterized in that the control member is constituted by a lever (29) mounted to pivot about an axis (28) of the mobile element (10), the lower end of the lever (29) comprising a stop (32) coming, in one position of the lever (29), into contact with the slideway (7).

12. Installation according to one of the preceding Claims, characterized in that the mobile element (10) comprises means (30) adapted to ensure unwedging thereof.

13. Installation according to one of Claims 2 to 12, characterized in that the unwedging means are constituted by a cam (30), rendered fast with the lower part of a lever (29), which comes into abutment on inner faces of the slideway (7), so as to create new stop surfaces, transverse and/or vertical, such that the distances of the extreme transverse and/or vertical stop surfaces are sufficient to provoke unwedging of the mobile element (10).

14. Installation according to one of Claims 10 or 11, characterized in that the control element (39) released when the means for detecting the correct functioning of the lock (21) are activated, is disposed on the control member (29).

## Patentansprüche

1. Vorrichtung, einerseits für die Kontrolle der Blockierung eines Lastfahrzeugs an einem Andockplatz (1), und andererseits für die Kontrolle der Verbindung zwischen diesem Andockplatz (1) und dem Fahrzeug, welche Mittel zur Blockierung (3) mindestens eines Rades (49) dieses Fahrzeugs umfaßt, dadurch gekennzeichnet, daß die genannten Blockierungsmittel (3)
- mindestens eine der Länge nach und im rechten Winkel zum Andockplatz (1) angebrachte, mit dem Boden verbundene Führungsschiene (7),
- ein mit Schiebevorrichtung in die Führungsschiene (7) eingeführtes bewegliches Element (10), das mindestens eine Keilleiste (21) trägt, die zwei Zustände einnehmen kann, nämlich einen Blockierungszustand, bei dem sie vor mindestens ein Rad (49) des Fahrzeugs gesetzt wird, und einen Ruhezustand, bei dem sie zurückgestellt wird, wobei die Keilleiste (21) im Blockierungszustand in der Lage ist eine vom Rad (49) ausgeübte Belastung mit vertikaler und/oder horizontaler Komponente auszuhalten,
- mit dem beweglichen Element (10) verbundene Mittel (15, 16, 17), die in der Lage sind die horizontale Komponente und/oder die vertikale Komponente der genannten Belastung in Blockierungskraft des genannten beweglichen Elements (10) in der Führungsschiene (7) umzusetzen,
umfassen.

2. Vorrichtung nach Anspruch 1, dadurch gekennzeichnet, daß die Mittel, die in der Lage sind die horizontale Komponente der genannten Belastung in Blockierungskraft umzusetzen, zwei Anschlagflächen (16, 17) des beweglichen Elements (10) umfassen, nämlich eine auf der gegenüberliegenden Seite des genannten Rades (49) plazierte vordere Anschlagfläche (16), und eine auf der Seite des genannten Rades (49) plazierte hintere Anschlagfläche (17), welche an innere Seitenwände der Führungsschiene (7) angrenzen und die, wenn das Rad (49) gegen die Keilleiste (21) drückt, an die genannten inneren Seitenwänden gebracht werden, so daß das bewegliche Element (10) in der Führungsschiene (7) blockiert wird.

3. Vorrichtung nach Anspruch 1, dadurch gekennzeichnet, daß die Mittel, die in der Lage sind die vertikale Komponente der genannten Belastung in Blockierungskraft umzusetzen, zwei Anschlagflächen (14, 18) des beweglichen Elements (10) umfassen, nämlich eine obere und hintere Anschlagfläche (14) und eine untere und vordere Anschlagfläche (18), welche an innere, jeweils obere und untere Wände der Führungsschiene (7) angrenzen und die, wenn das Rad (49) gegen die Keilleiste (21) drückt, an die genannten inneren Seitenwände gebracht werden, so daß das bewegliche Element (10) in der Führungsschiene (7) blockiert wird.

4. Vorrichtung nach einem der vorangehenden Ansprüche, dadurch gekennzeichnet, daß die Führungsschiene (7) aus zwei metallischen Profilelementen (7a) mit einem U-förmigen rechtwinkligen Querschnitt besteht, deren Öffnungen sich gegenüberstehen, und die seitlich auseinanderstehen, um zwischen ihnen mindestens eine längliche obere Rille (12) zu bilden.

5. Vorrichtung nach einem der Ansprüche 2 bis 4, dadurch gekennzeichnet, daß die genannte Keilleiste (21) auf einer mit dem beweglichen Element (10) verbundenen Platine (11) sitzt, deren Basis einen vertikalen Flügel (13) umfaßt, der in einer der Rillen der Führungsschiene (7) positioniert wird, wobei genannte Anschlagflächen (16, 17 - 14, 18) aufgenanntem vertikalen Flügel (13) angebracht sind.

6. Vorrichtung nach Anspruch 5, dadurch gekennzeichnet, daß die Anschlagflächen, obere (14) und untere (18), ein und demselben Teil (15) angehören.

7. Vorrichtung nach einem der vorangehenden Ansprüche, dadurch gekennzeichnet, daß das bewegliche Element (10) Mittel (25) zum Auffinden der richtigen Positionierung der Keilleiste (21) vor dem Rad (49) des Fahrzeugs umfaßt, welche in der Lage sind, die Verbindung zwischen Andockplatz (1) und Fahrzeug zu unterbinden, wenn die Keilleiste (21) falsch am Rad (49) angesetzt wurde.

8. Vorrichtung nach Anspruch 7, dadurch gekennzeichnet, daß die Mittel zum Auffinden der richtigen Positionierung der Keilleiste (21) einen seitlich gerichteten Fühler (25) umfassen, der hinter der Keilleiste (21) angebracht ist, und der mit Hilfe von elastischen Mitteln an das Rad (49) des Fahrzeugs, das blockiert werden soll, gesetzt wird, wenn die Keilleiste (21) ihre korrekte Position zum Rad eingenommen hat.

9. Vorrichtung nach einem der Ansprüche 7 oder 8, dadurch gekennzeichnet, daß sie Mittel umfaßt, die geeignet sind, ein Steuerungselement (39) freizugeben, wenn die Mittel (25) zum Auffinden der richtigen Positionierung der Keilleiste (21) aktiviert sind, wobei das genannte Steuerungselement (39) für die Öffnung und Schließung der Verbindungsmittel zwischen Andockplatz (1) und Fahrzeug sorgt.

10. Vorrichtung nach einem der vorangehenden Ansprüche, dadurch gekennzeichnet, daß das bewegliche Element (10) Blockierungsmittel, oder 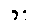 Vorblockierungsmittel" in Bezug zur Keilleiste (7), umfaßt, die durch ein Steuerungsglied (29) gesteuert werden.

11. Vorrichtung nach Anspruch 10, dadurch gekennzeichnet, daß das Steuerungsglied aus einem montierten Hebel (29) besteht, der sich um eine Achse (28) des beweglichen Elements (10) dreht, wobei das untere Ende des Hebels (29) einen Anschlag (32) umfaßt, der in einer Position des Hebels (29) die Führungsschiene (7) berührt.

12. Vorrichtung nach einem der vorangehenden Ansprüche, dadurch gekennzeichnet, daß das bewegliche Element (10) Mittel (30) umfaßt, die geeignet sind, für das Lösen der Blockierung zu sorgen.

13. Vorrichtung nach einem der Ansprüche 2 bis 12, dadurch gekennzeichnet, daß die Mittel zum Lösen der Blockierung aus einer mit der unteren Hälfte des Hebels (29) verbundenen Kurvenscheibe (30) bestehen, die sich gegen die inneren Wände der Führungsschiene (7) schiebt, so daß neue seitliche und/oder vertikale Anschlagflächen enstehen, wobei die äußeren Entfernungen der seitlichen und/oder vertikalen Anschlagflächen groß genug sind, um die Blockierung des beweglichen Elements (10) zu lösen.

14. Vorrichtung nach einem der Ansprüche 10 oder 11, dadurch gekennzeichnet, daß das Steuerungselement (39), das freigegeben wird, wenn die Mittel zum Auffinden der richtigen Positionierung der Keilleiste (21) aktiviert sind, sich auf dem Steuerungsglied befindet (29).
